# EUROPEAN PATENT SPECIFICATION

(11) **EP 0 706 755 B1**
(45) Date of publication and mention of the grant of the patent: **07.04.1999**
(21) Application number: 95202641.7
(22) Date of filing: 02.10.1995
(51) Int. Cl.: A01K 5/00

(54) **A device and a method for mixing fodder**
Vorrichtung und Verfahren zum Mischen von Futter
Dispositif et méthode pour mélanger du fourrage

(30) Priority: 10.10.1994 NL 9401662
(43) Date of publication of application: 17.04.1996
(60) Divisional application: 97200326.3
(73) Proprietor: Trioliet Mullos B.V., NL-7581 HE Losser (NL)
(72) Inventor: Van der Plas, Nicolaas, NL-7576 WB Oldenzaal (NL)
(74) Representative: Louet Feisser, Arnold

(56) References cited:
- EP-A- 0 003 813
- EP-A- 0 432 702
- EP-A- 0 506 158
- EP-A- 0 540 130
- DE-A- 2 726 203
- US-A- 4 432 499

## Description

The invention relates to a movable mixing device for mixing fodder, which device is provided with a mixing chamber comprising one or more rotors which are rotatable about a vertical axis. The term fodder in this description is to be given a wide interpretation, it comprises silage, among other things, but also all other types of fodder that need to undergo a mixing and/or loosening operation before being fit for consumption. Also the terms mixing and loosening are to be given a wide interpretation. Also cutting operations fall under that term.

Mixing devices provided with a rotor which is rotatable about a vertical axis are known in agriculture (see for example EP-A-0 003 813). Such devices generally have a mixing chamber provided with a side wall which slopes upwards toward the outside. Material to be mixed, for example silage, is introduced into the device from above, after which it is processed by the rotor, which is provided with mixing means. A conveyor belt may for example be used for introducing material into the mixing chamber, which conveyor belt transports the material to above the device and then drops it into the mixing chamber. After having undergone the required processing in the mixing chamber, the fodder may be discharged through an opening in the side wall of the mixing chamber to a conveyor belt, which can subsequently carry off said fodder to the desired location.

The object of the invention is to provide an improved machine for mixing fodder.

According to one aspect of the invention the device is provided with a mixing chamber, which may be filled through an opening in the side wall thereof. It is possible thereby to design part of the side wall of the mixing chamber such that said part of the side wall is used to introduce material into the mixing chamber when filling said mixing chamber.

Preferably the feed opening of the mixing chamber is located at the rear side of the device. The part of the side wall which closes the mixing chamber during mixing and which is open during filling will be called the moving means herein.

The moving means may be in the form of a loading board, which is secured in a fixed position to a telescopic arm or which is pivoted to two pivoting arms. The loading board can pick up material and move said material to the mixing chamber by means of the arm or arms. The loading board may thereby be provided with cutting means for cutting off or sawing off silage, for example. By providing the device with guide plates it may be ensured that the material is correctly moved to within the mixing chamber. All this will be explained in more detail by means of embodiments.

The moving means may also be in the form of a wall part of the mixing chamber, which can pivot about a substantially horizontal pivot axis located near the bottom of the mixing chamber. As a result of this the wall part, hereinafter also called loading board, can pivot downwards to the floor or to a position near the floor, after which the material may be deposited on the loading board. The term floor refers to the floor on which the device or the tractor to which the device is attached stands. The material is then introduced into the mixing chamber as a result of the pivoting of the loading board to the closed position. Also in this embodiment of the invention guide plates may be provided for correctly guiding the material to the mixing chamber.

The above-described loading board may also be provided with cutting means, for example for cutting off silage, whereby said cutting means are mounted in such manner as to capable of pivoting movement with respect to the loading board and whereby said cutting means can pivot upwards along with the loading board to the closed position.

The device according to the invention may be provided with wheels, so that the device can be hitched to a tractor as a trailer, it is also possible, however, for the device to be hitched to a tractor via the three-point linkage.

If the device is provided with wheels, said wheels are preferably not positioned under the bottom of the device but beside said bottom. Furthermore the device is preferably designed such that the wheels are positioned behind the widest part of the device. When in addition to this the driving gear of the rotor or rotors is of flat construction, the bottom may be positioned close to the floor, and the wheels can be pivoted upwards during the filling of the mixing chamber, in such a manner that the bottom of the mixing chamber will come to lie even closer to the floor.

The mixing chamber may be round or oval or have an otherwise elongated shape, when seen in plan view. Preferably the mixing chamber is configured such that the largest dimension or nearly the largest dimension is located transversely to the direction of movement. The mixing chamber may be provided with one or more rotors. If more than one rotor, for example two rotors are provided, said rotors may be fitted with mixing means arranged in overlapping relationship, seen in plan view. The mixing means of the various rotors may be positioned at different heights thereby and rotate in intersecting paths.

Preferably the rotors have the same direction of rotation. The rotors are preferably driven by means of a chain drive, which chain drive may be of flat construction, butting against the under-side of the bottom of the mixing chamber, and which is moreover capable of bridging a large reduction.

If a loading board secured to one telescopic arm is used, it is preferred to use two rotors, so that the pivoting telescopic arm may at least partially be positioned between the upper sides of said rotors when occupying its lowermost position. If a loading board secured to two telescopic arm is used, it is preferred to use one rotor, so that the two pivoting arms may be positioned on either side of the upper side of said rotor when occupying their lowermost position.

The invention furthermore relates to a method for mixing fodder, wherein the mixing chamber, which is provided with a rotor which rotates about a vertical axis, is filled with material through an opening in the side wall.

Further aspects of the invention are disclosed in the following description of the Figures and defined in the claims.
Figure 1 is a plan view of an embodiment of a mixing device;
Figure 2 is a sectional view along the line II - II in Figure 1;
Figure 3 is a rear view of the device according to Figure 1;
Figure 4 is a plan view of the same embodiment in a different position;
Figure 5 is a sectional view along the line V - V in Figure 4;
Figure 6 is a rear view of the device according to Figure 4;
Figure 7 shows an embodiment provided with a loading board secured to a telescopic arm;
Figure 8 is a view according to the arrow VIII in Figure 7;
Figure 9 shows an embodiment provided with a pivoted loading board;
Figure 10 is a plan view of the device according to Figure 9;
Figure 11 shows an embodiment comprising a loading board provided with a cutting means;
Figure 12 shows the embodiment according to Figure 13 in a different position.

The figures are only very diagrammatic illustrations of embodiments, wherein like parts are numbered alike. Although the device according to the invention may be constructed in such a manner that it can be mounted in the three-point linkage of a tractor, the illustrated embodiments are provided with wheels 1 and coupling means 2, by means of which the device can be hitched to a drawing vehicle. The device is driven by means of a drive shaft 3, which can be coupled to the power take-off of the drawing vehicle. In the embodiments the rotor is driven by means of a chain drive provided with a chain 4, which is coupled to the power take-off shaft 3 by means of a right-angled transmission 5. The advantage of a chain transmission is that a high reduction can be obtained and that the driving gear can be of flat construction, so that it does not project downwards too much.

In the embodiments the device according to the invention is provided with one or two rotors 6, which are rotatable about a substantially vertical axis. Like the other parts of the device, the rotors 6 are only diagrammatically indicated, and in particular the mixing means secured to the rotors, which may have a great many different shapes, are only diagrammatically indicated as disc-shaped parts 7 in most of the Figures.

The device comprises a mixing chamber 8, in which the rotors 6 can rotate, which mixing chamber 8 has a bottom 9, through which said rotors 6 extend and under which the rotor drive comprising a chain 4 and chain wheels 3 is mounted. The mixing chamber 8 is furthermore provided with a side wall 11, which slopes upwards from the bottom 9 towards the outside. The side wall 11 may be round or oval, when seen in plan view, or have an otherwise elongated shape extending either in transverse direction or in the longitudinal direction of the device.

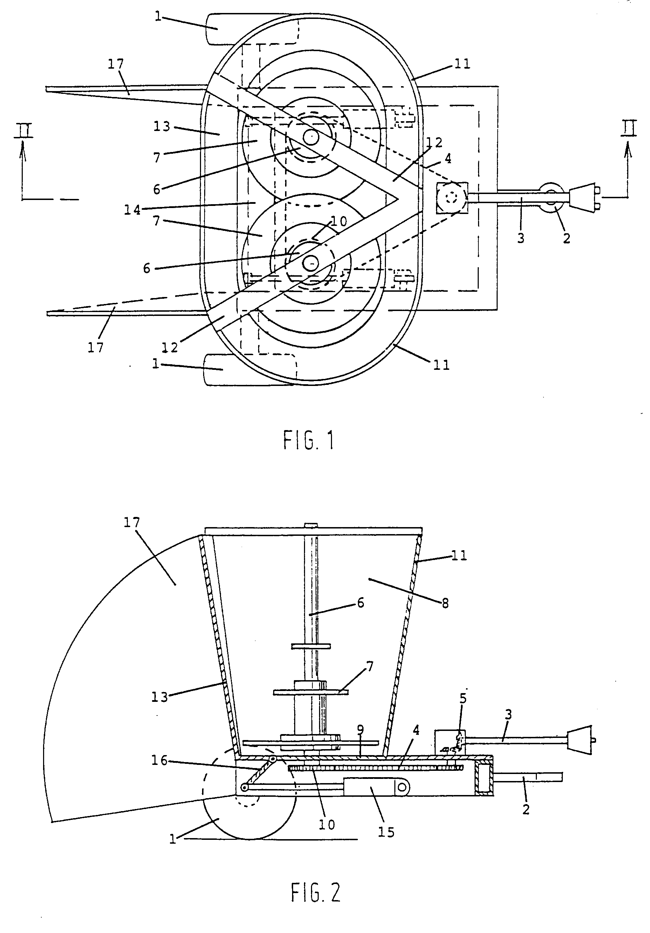

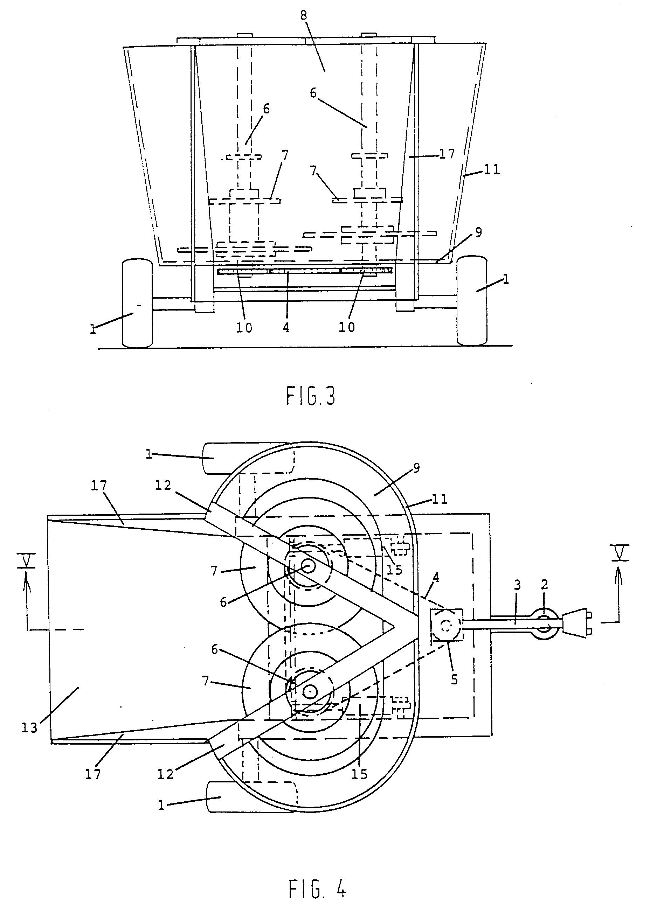

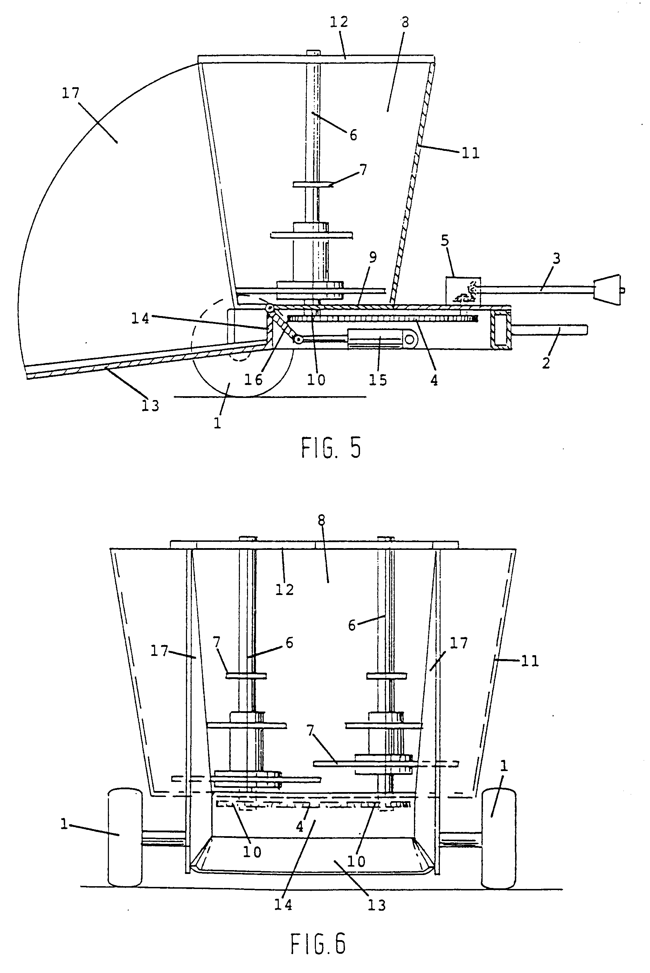

A first embodiment is shown in Figures 1 - 6. Figure 1 is a plan view of a device comprising two rotors 6, whereby the lowermost of the (diagrammatically illustrated) mixing means overlap (seen in plan view). The lowermost mixing means 7 are thereby larger than the mixing means 7 disposed thereabove. The rotors 6 are journalled in the bottom 9 of the device, as well as in supporting beams 12, which are secured to the upper edge of the side wall 11.

In all embodiments the mixing chamber 8 may be filled with material through a recess in the side wall 11 located at the rear side of the device. The material may consist of silage, which is cut from a stock, or of any other material or mixture of materials that are to be loosened and/or mixed.

In the embodiment according to Figure 1 the rear wall part 13 of side wall 11, together with a bottom part 14, can pivot about a substantially horizontal pivot axis located in the bottom 9 and extending in the transverse direction of the device. The wall part 13 can be swung back so far that its edge will come to lie near the floor or on the floor. The pivoting movement of the wall part 13 is effected by the control cylinder 15, which is connected to the pivoted part by means of arm 16. Furthermore means may be provided for moving the wheels 1 upwards with respect to the device, so that the device can be moved to a position closer to the floor. After the material to be mixed has been deposited on wall part 13, the control cylinder 15 can pivot the wall part 13 upwards, so that said wall part butts against the other part of side wall 11. The material to be mixed will then land in the mixing chamber 8. In order to prevent material from falling sideways off the wall part 13, guide walls 17 are provided on either side of the path of movement of the wall part 13, said guide walls in this embodiment extending obliquely outwards in rearward as well as in upward direction, whereby said guide walls have a slightly curved surface.

The diagrammatically illustrated vertical rotors may have any desired shape and the mixing means 7 may be provided with any desired type of catching means, such as blades, whilst in addition they may be slightly helical, so that the material is moved upwards during rotation. The two rotors 7 may rotate in the same direction, as shown in the embodiment, as a result of which some cutting of the material will take place by the overlapping mixing means. The rotors 7 may also rotate in opposite directions, to which end the drive chain 4 must be guided into a different path, of course, or whereby a different type of drive is used.

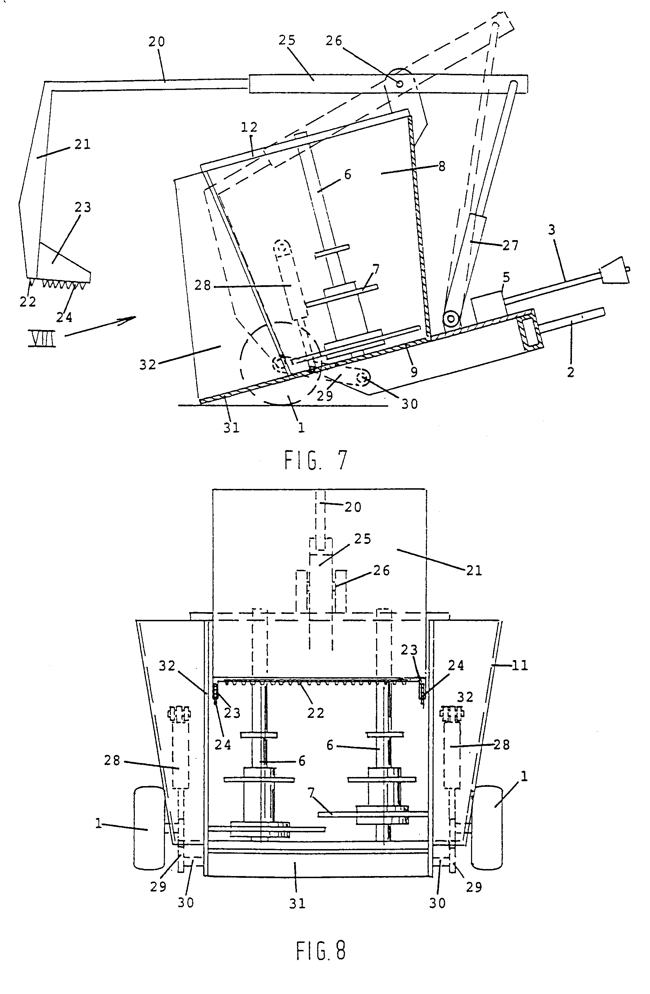

Figure 7 shows an embodiment wherein the device is provided with a telescopic arm 20, to which a board 21 extending substantially perpendicularly thereto is secured. The board 21, which may be slightly curved so as to butt closely against the remaining portion of the side wall 11, is at its bottom side provided with cutting means in the shape of saw teeth 22, which may make a sawing movement, so that it is possible to cut silage from a stock, for example. The board 21 is on either side provided with a part 23 extending substantially horizontally to the board, said part likewise being provided with saw teeth 24, so that a block of silage can be cut off. It is also possible for the board 21 to have a part 23 on one side only. The hydraulic system with which saw 22 is driven is not shown in the figures.

In the position in which the board 21 closes the feed opening said board may extend slightly obliquely, so as to extend towards the outside in the direction of movement of the fodder during the mixing operation. Such a position is advantageous, because it prevents said fodder from accumulating and exerting a thrust before the board.

The telescopic arm may be slid into the hollow tube 25 by means of a hydraulic drive. The telescopic arm 20 and a tube 25 together form a telescopic arm, which can pivot about pivot pin 26, which is located near the upper edge of the mixing chamber, and that at the front side. The telescopic arm 20, 25 can be pivoted about pin 26 by means of a hydraulic cylinder 27.

Figure 7 also shows that the wheels 1 can be pivoted upwards by means of hydraulic cylinder 28, which is secured to side wall 11 at its upper side and to pivoting arm 29 at its bottom side, said pivoting arm 29 on the one hand being connected to the wheel 1 and on the other hand, via pivot pin 30, to the frame of the device. As is apparent from Figure 7, wheel 1 may be moved in such a manner with respect to the device that the rear side of the device will come to lie near the floor.

The rear side of the device is provided with extended part 31 of the bottom 9 and with guide plates 32. When the silage cut off by the saw teeth 22, 24 is moved towards the mixing chamber by means of board 21, the extended part 31 of the bottom and the guide plates 32 provide an adequate guiding of the material to the mixing chamber 8. After sufficient material has thus been introduced into the mixing chamber, the wheels may be pivoted in such a manner that the device occupies a substantially horizontal position, after which the material can be loosed by rotation of the rotors 6 and possibly be mixed with other material during the time that the device is driven to the place where the material is to be delivered.

As is apparent from Figure 7, the telescopic arm 20, 25 may be pivoted so far downwards that it will partially come to lie between the two rotors 6.

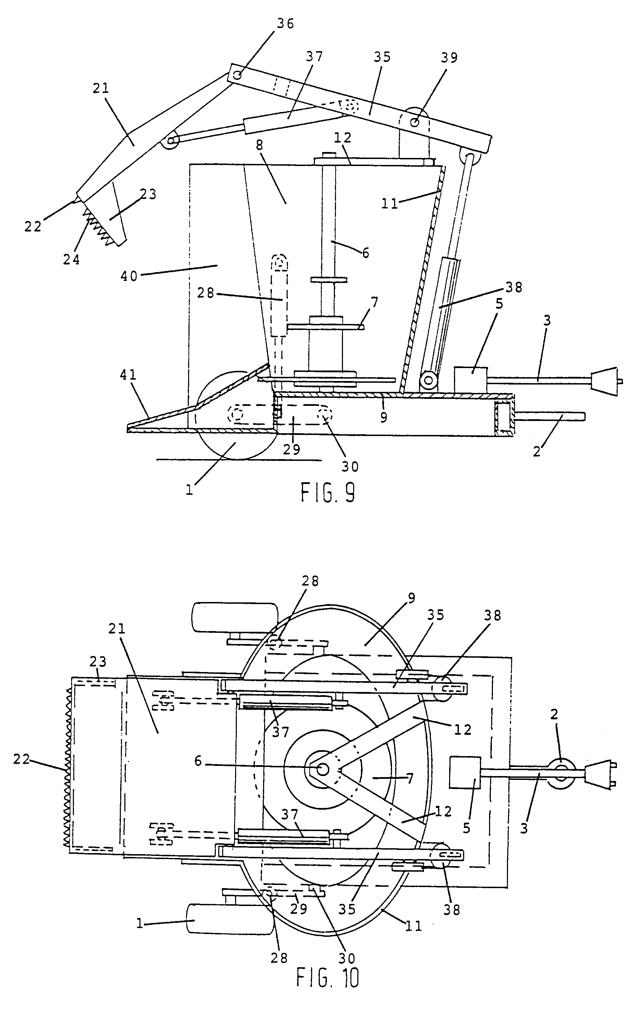

Figure 9 shows an embodiment wherein the board 21 is pivoted to two arms 35 by means of pivot pin 36 and hydraulic control cylinder 37. The arms 35 can be pivoted about pivot pin 39 by means of control cylinders 38. It will be apparent that the board 21 can move in such a manner that silage is cut from a stock thereof by means of saw teeth 22, 24.

Guide plates 40 are provided on either side of the feed opening of the device for guiding the material being moved towards the mixing chamber 8 by the board 21, and the feed opening is at its bottom side provided with a guide plate 41, which extends so far into the mixing chamber 8 that it is partially located above the lowermost mixing means 7 of rotor 6. As a result of this the material is deposited on said lowermost mixing means 7 from above. The part 23 extending perpendicularly to the board 21 may likewise extend to above the lowermost part of rotor 6 in the position in which board 21 closes the feed opening. A similar construction may also be used in the embodiment according to Figure 7.

In this embodiment the mixing chamber 8 is provided with one rotor 6, which is with its upper side journalled in a frame which consists of two beams 12, which are each secured to the upper edge of wall 11 at their front sides. The arms 35 can be pivoted downwards so far that they are at least partially positioned on either side of the upper side of rotor 6.

The device according to the embodiment can be moved towards the floor in the manner already described before by moving the wheels upwards by means of the pivoting arm 29.

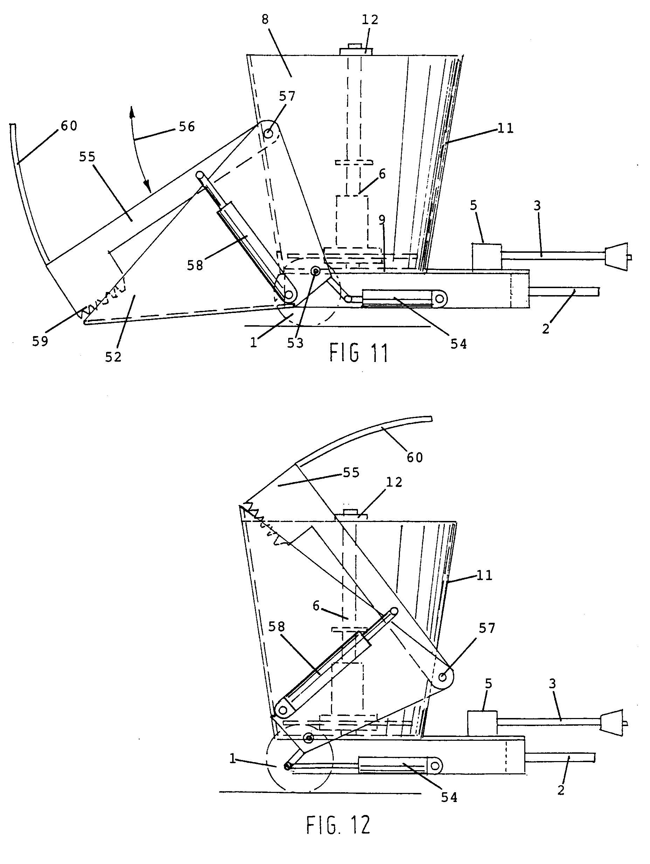

Figure 11 shows another embodiment, wherein the device is provided with a pivoted loading unit 52, which can be pivoted about a pivot pin 53 by means of a control cylinder 54. A cutting device 55 is pivoted to loading unit 52, which cutting device can be pivoted about pivot pin 57 by means of control cylinder 58. The cutting device 55 is provided with cutting means 59, which may or may not be movable, by means of which silage may be cut from a stock, for example. The guide plate 50 thereby ensures that the cut-off silage lands in the loading unit 52. When sufficient material has been cut off, the entire loading unit can be pivoted about pivot pin 53 to the position shown in Figure 12, whereby the cut-off material is deposited in the mixing chamber.

The construction is not limited to the illustrated embodiments, which are only given by way of illustration.

Further preferred embodiments of the movable mixing device are as follows.

A device whereby the said feed opening is located at the rear side of said mixing chamber, seen in the normal direction of movement of the device.

A device whereby two rotors are provided, the vertical axes of which lie in a vertical transverse plane, so that said rotors are positioned on either side of said telescopic arm, seen from above, whereby said arm, when occupying its lowermost position, is at least partially positioned between said rotors or between upwardly extending parts thereof or fastening means for the rotors provided thereabove.

A device whereby said cutting means comprise, at least at one end, a part extending substantially perpendicularly to said board.

A device whereby at least two rotors are present, whose mixing means overlap, seen from above.

A device whereby the paths of the mixing means of several rotors intersect each other, whereby the rotors rotate in opposite directions and means are provided for attuning the movements of said rotors to each other.

A device whereby said rotors comprise a helical mixing means and that their rotations are attuned to each other.

A device whereby said guide walls extend beyond the side wall of the mixing chamber into said mixing chamber.

A device whereby a lower guide wall slopes upwards into the mixing chamber, whereby part of the rotor can move under the guide wall.

A device whereby said guide wall is provided with a flexible closing means, against which the moving means can abut in the closed position of the feed opening.

A device whereby, in the position wherein the feed opening is closed, said moving means slightly extends at an acute angle with respect to the vertical longitudinal plane of the device.

A device whereby the shape of the side wall of the mixing chamber downstream of the feed opening is such that there is an initially increasing space between rotor and wall in downstream direction.

A device whereby the upper part of the side wall of the mixing chamber, at the front side of the device where the pivoted arm may be pivot-mounted, is curved in rearward direction, this being the direction of the mixing chamber.

A device whereby said guide walls include an angle with the vertical longitudinal plane, and that in such a manner that said guide walls diverge both in rearward and in upward direction.

A device whereby means are provided for lowering said mixing chamber with respect to said wheels to a position closer to the floor.

A device whereby a part of the side wall can be swung down in such a manner that its edge can be moved to a position near the ground, said swing-down part being provided with a pivoted cutting means, which is capable of cutting material from a stock, which material is introduced into said mixing chamber by swinging up the swing-down part.

A device whereby said device comprises a discharge opening for the mixed and/or loosened material, which is provided in a side wall, near the bottom, and which is provided with a closing slide being movable in a substantially vertical direction.

A device which comprises a discharge opening for the mixed and/or loosened material, which discharge opening is provided with a swing-down part of the wall of the mixing chamber.

A device whereby said swing-down wall part forms a guide chute for the material.

A device whereby said swing-down part also comprises a part of the bottom of the mixing chamber.

A device whereby guide walls are provided, which laterally bound said swing-down part.

A device whereby two discharge openings located opposite each other are provided at the location where the mixing chamber has its largest diameter.

A device whereby a plate-shaped stop means can slide through the side wall into the mixing chamber downstream of said discharge opening, and that the same hydraulic means control said discharge opening and said stop means.

A device whereby a discharge opening is provided with a discharge chute, which can pivot about a substantially vertical pivot axis located near said discharge opening.

A device whereby said discharge chute is centrally pivoted to the rear side of the device.

A device whereby said rotor is provided with mixing means, which extend downwards from a higher part of the rotor.

A device whereby said mixing means are spring means, which extend to a position near the bottom of the mixing chamber.

A device whereby one or more rotors are driven at their bottom sides by means of a chain drive.

A device whereby part of the bottom can pivot about a pivot axis located near the bottom and whereby the fixed part of said bottom continues above and beyond said pivot axis.

## Claims

1. A movable mixing device for mixing fodder, which device is provided with a mixing chamber (8) comprising one or more rotors (6) which are rotatable about a vertical axis, which mixing chamber (8) is provided with a bottom (9) and with wall parts (11) which slope upwards toward the outside, characterized in that filling means are present for filling said mixing chamber (8), said means comprising a closable opening in a side wall (11) of said mixing chamber (8), through which the material to be mixed can be fed to the mixing chamber (8).

2. A device according to claim 1 characterized in that said device is provided with wheels (1) and/or with means (2) for hitching the device to a tractor, whereby the wheels (1) are positioned outside the bottom (9) of the mixing chamber (8), seen in plan view.

3. A device according to any one of the preceding claims, characterized in that said feed opening may be closed during the mixing operation by a moving means which introduces the material into the mixing chamber (8) while said filling takes place.

4. A device according to any one of the preceding claims, characterized in that said filling means are provided with a telescopic arm (20,25), which can pivot in a vertical longitudinal plane (seen in the direction of movement) about a pivot point (26) which is located near the upper edge of the mixing chamber (8), at the front side thereof (seen in the direction of movement), which arm (20,25) is at one end provided with a board (21) extending substantially transversely to said arm (20,25), which board (21) constitutes the moving means and which is capable of substantially closing said feed opening.

5. A device according to any one of the claims 1 - 3, characterized in that said filling means are provided with two substantially parallel arms (35), which can each pivot in a vertical longitudinal plane (seen in the direction of movement) about coaxially positioned hinges (39), which are located near the upper edge of the mixing chamber (8), at the front side thereof (seen in the direction of movement), said arms (35) at their ends being pivoted to a board (21) which may form the moving means and which can substantially close said feed opening.

6. A device according to any one of the claim 4 or 5, characterized in that said board (21) is near its bottom edge provided with cutting means (22,24) for cutting silage from a stock.

7. A device according to any one of the preceding claims, characterized in that said feed opening is bounded by guide walls (17), along which the moving means can move and which guide the material to the mixing chamber (8).

8. A device according to claim 7, characterized in that a lower guide wall (17) extends outwards to a position near the floor on which the device stands.

9. A device according to any one of the preceding claims, characterized in that said filling means comprise a part (13) of the side wall (11) and a part (14) of the bottom (9) of the mixing chamber (8), which parts (13,14) are jointly pivoted about a pivot axis located in the bottom (9), which extends in transverse direction, whereby the edge of the pivoted part (13,14) located furthest from said pivot axis can butt against the floor on which the device stands.

10. A device according to claim 9, characterized in that said opening is provided with two guide walls (17) extending outwards with respect to the mixing chamber (8), along which the pivoted part (13,14) can move and which laterally bound said feed opening.

11. A method for mixing fodder, wherein said fodder is processed by one or more rotors (6) which rotate about a vertical axis, whereby the mixing chamber (8) is filled through an opening in the side wall (11) thereof.

## Patentansprüche

1. Bewegliche Mischvorrichtung zum Mischen von Futter, wobei die Vorrichtung mit einer Mischkammer (8) versehen ist die einen oder mehrere Rotoren (6) umfaßt, die um eine vertikale Achse gedreht werden können, die Mischkammer (8) mit einem Boden (9) und mit Wandteilen (11) versehen ist die nach oben zur Außenseite geneigt sind, **dadurch gekennzeichnet**, daß eine Fülleinrichtung zum Füllen der Mischkammer (8) vorhanden ist, wobei die Einrichtung eine verschließbare Öffnung in einer Seitenwand (11) dar Mischkammer (8) umfaßt, durch die das zu mischende Material der Mischkammer (8) zugeführt werden kann.

2. Vorrichtung nach Anspruch 1, **dadurch gekennzeichnet**, daß die Vorrichtung mit Rädern (1) und/oder mit einer Einrichtung (2) zum Anhängen der Vorrichtung an einen Traktor versehen ist wobei die Räder (1), in Draufsicht gesehen, außerhalb des Bodens (9) der Mischkammer (8) angeordnet sind.

3. Vorrichtung nach einem der vorangehenden Ansprüche, **dadurch gekennzeichnet**, daß die Zuführöffnung während des Mischvorgangs durch eine sich bewegende Einrichtung verschlossen werden kann, die das Material beim Füllen in die Mischkammer (8) einführt.

4. Vorrichtung nach einem der vorangehenden Ansprüche, **dadurch gekennzeichnet**, daß die Fülleinrichtung mit einem Teleskoparm (20, 25) versehen ist, der in einer vertikalen Längsebene (in der Bewegungsrichtung gesehen) um einen Schwenkzapfen (26) geschwenkt werden kann, der sich in der Nähe der Oberkante der Mischkammer (8) an der Vorderseite derselben (in der Bewegungsrichtung gesehen) befindet, wobei der Arm (20, 25) an einem Ende mit einer Klappe (21) versehen ist, die sich im wesentlichen quer zu dem Arm (20, 25) erstreckt, wobei die Klappe (21) die sich bewegende Einrichtung bildet und die Zuführöffnung im wesentlichen verschließen kann.

5. Vorrichtung nach einem der Ansprüche 1-3, **dadurch gekennzeichnet**, daß die Fülleinrichtung mit zwei im wesentlichen parallelen Armen (35) versehen ist, die in einer vertikalen Längsebene (in der Bewegungsrichtung gesehen) um koaxial angeordnete Schwenkpunkte (39) geschwenkt werden können, die sich in der Nähe der Oberkante der Mischkammer (8) an der Vorderseite derselben (in der Bewegungsrichtung gesehen) befinden, wobei die Arme (35) an ihren Enden schwenkbar an einer Klappe (21) angebracht sind, die die sich bewegende Einrichtung bilden kann und die Zuführöffnung im wesentlichen verschließen kann.

6. Vorrichtung nach einem der Ansprüche 4 oder 5, **dadurch gekennzeichnet**, daß die Klappe (21) in der Nähe ihrer Unterkante mit Schneideinrichtungen (22, 24) versehen ist, die Silage von einem Vorrat abschneiden.

7. Vorrichtung nach einem der vorangehenden Ansprüche, **dadurch gekennzeichnet**, daß die Zuführöffnung durch Leitwände (17) begrenzt wird, an denen sich die sich bewegende Einrichtung bewegen kann, und die das Material in die Mischkammer (8) leiten.

8. Vorrichtung nach Anspruch 7, **dadurch gekennzeichnet**, daß sich eine untere Leitwand (17) nach außen bis an eine Position in der Nähe des Bodens erstreckt, auf dem die Vorrichtung steht.

9. Vorrichtung nach einem der vorangehenden Ansprüche, **dadurch gekennzeichnet**, daß die Fülleinrichtung einen Teil (13) dar Seitenwand (11) und einen Teil (14) des Bodens (9) der Mischkammer (8) umfaßt, wobei die Teile (13, 14) gemeinsam um eine Schwenkachse geschwenkt werden, die sich im Boden (9) befindet und in einer Querrichtung verläuft, wobei die Kante des Schwenkteils (13, 14), die sich am weitesten von der Schwenkachse entfernt befindet, auf dem Boden aufliegen kann, auf dem die Vorrichtung steht.

10. Vorrichtung nach Anspruch 9, **dadurch gekennzeichnet**, daß die Öffnung mit zwei Leitwänden (17) versehen ist, die sich in bezug auf die Mischkammer (8) nach außen erstrecken und an denen sich der Schwenkteil (13, 14) entlangbewegen kann und die die Zuführöffnung seitlich begrenzen.

11. Verfahren zum Mischen von Futter, wobei das Futter von einem oder mehreren Rotoren (6) verarbeitet wird, die sich um eine vertikale Achse drehen, wobei die Mischkammer (8) über eine Öffnung in der Seitenwand (11) derselben gefüllt wird.

## Revendications

1. Un dispositif mobile pour mélanger du fourrage, lequel dispositif est muni d'une chambre de mélange (8) comprenant un ou plusieurs rotors (6) qui sont susceptibles de tourner autour d'un axe vertical, laquelle chambre de mélange (8) est munie d'un fond (9) et de parties de paroi (11) qui sont inclinées vers le haut et vers l'extérieur, caractérisé en ce qu'il comporte des moyens de remplissage pour remplir ladite chambre de mélange (8), lesdits moyens comprenant une ouverture susceptible d'être obturée et ménagrée dans une paroi latérale (11) de ladite chambre de mélange (8), et à travers laquelle le matériau à mélanger peut être fourni à la chambre de mélange (8).

2. Un dispositif selon la revendication 1, caractérisé en ce que ledit dispositif est muni de roues (1) et/ou de moyens (2) pour atteler le dispositif à un tracteur, de telle manière que les roues (1) soient positionnées à l'extérieur du fond (9) de la chambre de mélange (8), vue en plan.

3. Un dispositif selon l'une quelconque des revendications précédentes, caractérisé en ce que ladite ouverture peut être fermée pendant l'opération de mélange par des moyens mobiles qui introduisent le matériau dans la chambre de mélange (8) pendant que se réalise ledit remplissage.

4. Un dispositif selon l'une quelconque des revendications précédentes, caractérisé en ce que lesdits moyens de remplissage sont munis d'un bras télescopique (20, 25), qui petit pivoter dans un plan vertical longitudinal (vu dans la direction de déplacement) autour d'un point de pivotement (26) qui est situé à proximité du bord supérieur de la chambre de mélange (8), sur sa face frontale (vue dans la direction de déplacement), lequel bras (20, 25) est muni à une extrémité d'une plaque ou planche (21) s'étendant de façon sensiblement transversale par rapport audit bras (20, 25), laquelle plaque (21) constitue les moyens de déplacement et est capable de fermer sensiblement ladite ouverture d'alimentation.

5. Un dispositif selon l'une quelconque des revendications 1 à 3, caractérisé en ce que lesdits moyens de remplissage sont munis de deux bras sensiblement parallèles (35), qui peuvent chacun pivoter dans un plan vertical longitudinal (vu dans la direction de déplacement) autour de charnières (39) positionnées coaxialement, et qui sont situées à proximité du bord supérieur de la chambre de mélange (8), sur la face frontale de celle-ci (vue dans la direction de déplacement), lesdits bras (35) étant articulés à leurs extrémités à une plaque ou planche (21) qui peut former les moyens mobiles et qui peut sensiblement obturer ladite ouverture d'alimentation.

6. Un dispositif selon l'une quelconque des revendications 4 ou 5, caractérisé en ce que ladite plaque (21) est munie à proximité de son bord de fond de moyens de découpe (22, 24) pour découper de l'ensilage à partir d'un stock.

7. Un dispositif selon l'une quelconque des revendications précédentes, caractérisé en ce que ladite ouverture d'alimentation est délimitée par des parois de guidage (17), le long desquelles les moyens de déplacement peuvent se déplacer, et qui guident le matériau vers la chambre de mélange (8).

8. Un dispositif selon la revendication 7, caractérisé en qu'une paroi inférieure de guidage (17) s'étend à l'extérieur vers une position proche du plancher sur lequel repose le dispositif.

9. Un dispositif selon l'une quelconque des revendications précédents. caractérisé en ce que lesdits moyens de remplissage comportent une partie (13) de la paroi latérale (11) et une partie (14) du fond (9) de la chambre de mélange (8), lesquelles parties (13, 14) sont conjointement articulées autour d'un axe de pivotement situé dans le fond (9), et qui s'étend dans la direction transversale, de telle manière que le bord de la partie articulée (13, 14) situé le plus loin dudit axe de pivotement puisse venir en butée contre le plancher sur lequel repose le dispositif.

10. Un dispositif selon la revendication 9, caractérisé en ce que ladite ouverture est munie de deux parois de guidage (17), s'étendant vers l'extérieur par rapport à la chambre de mélange (8), le long desquelles la partie articulée (13, 14) peut se déplacer et qui délimitent latéralement ladite ouverture d'alimentation.

11. Un procédé pour mélanger du fourrage, dans lequel ledit fourrage est traité par un ou plusieurs rotors (6) qui tourne autour d'un axe vertical, de telle manière que la chambre de mélange (8) soit remplie par une ouverture ménagée dans sa paroi latérale (11).
